# EUROPEAN PATENT APPLICATION

(11) **EP 0 781 689 A1**
(43) Date of publication of application: **02.07.1997**
(21) Application number: 96308948.7
(22) Date of filing: 10.12.1996
(51) Int. Cl.: B60R 21/32

(54) **Inflatable restraint system including an optical image sensor**

(30) Priority: 27.12.1995 US 579533
(71) Applicant: Lucent Technologies Inc., Murray Hill, New Jersey 07974-0636 (US)
(72) Inventor: Dickinson, Alexander George, Neptune, New Jersey (US)
(74) Representative: Johnston, Kenneth Graham

(57) **Abstract**

An inflatable restraint system for a vehicle includes an airbag housing (7) and an airbag (9) located therein. An inflator assembly (5) is provided for inflating the airbag. A crash sensor (20) provides a first signal upon detection of at least one predetermined condition indicative of a crash. The restraint system also includes at least one optical image sensor (28) for detecting at least one occupant condition and, in response thereto, for providing a second signal. The second signal determines at least one parameter concerning inflation of the airbag. A controller is responsive to the first and second signals and provides a third signal to the inflator assembly. The inflator assembly inflates the airbag in accordance with the first and second signals.

## Description

### Technical Field

The present invention relates to an inflatable restraint system and more particularly to an inflatable restraint system that employs an optical image sensor to adjust deployment of the airbag.

### Background of the Invention

Inflatable restraint systems are commonly employed in vehicles such as automobiles to protect passengers. Conventional inflatable restraint systems include three components: a crash sensing mechanism that mounts to the vehicle frame, an airbag assembly located within the passenger compartment and an inflator assembly to deploy and inflate the airbag. The airbag inflates before the occupant impacts the vehicle and then quickly deflates to absorb the energy of the accelerating occupant.

while inflatable restraint systems generally enhance passenger safety, in some circumstances the force of inflation can injure or even kill an occupant. In particular, it has been noted that if the passenger seat is occupied with an infant in a rear-facing infant seat, the force of deployment can cause severe injury. Federal highway officials have subsequently warned that infants should not be placed in a passenger seat equipped with an airbag. However, occupants other than infants can also be injured if the occupant is not wearing a seat belt or if the occupant is seated in an improper position such as may occur when sitting too close to the airbag, for example. If the occupant is the driver, injury may occur when the steering wheel is tilted so that the airbag contained therein is aimed at the face rather than the chest.

Inflatable restraint systems are known which include a manual switch to deactivate the airbag. Additionally, so-called smart airbags have been proposed that can adjust how rapidly the airbag inflates, or whether it inflates at all, by sensing if the seat is occupied, the size of the occupant and the magnitude of the impact. Accordingly, there is a need for an inflatable restraint system that incorporates a simple, reliable and inexpensive sensor that can sense these various occupant conditions and adjust the deployment of the airbag accordingly.

### Summary of the Invention

The present invention provides an inflatable restraint system for a vehicle that includes an airbag housing and an airbag located therein. An inflator assembly is provided for inflating the airbag. A crash sensor provides a first signal upon detection of at least one predetermined condition indicative of a crash. The restraint system also includes at least one optical image sensor for detecting at least one occupant condition and, in response thereto, for providing a second signal. The second signal determines at least one parameter concerning inflation of the airbag. A controller is responsive to the first and second signals and provides a third signal to the inflator assembly. The inflator assembly inflates the airbag in accordance with the first and second signals.

The image sensor may detect the absence of an occupant or presence of an infant seat, for example. In either case, the image sensor provides a second signal that prevents the airbag from inflating, thereby avoiding potential injury if an infant is present and avoiding unnecessary deployment of the airbag if no occupant is present. More generally, the second signal provided by the image sensor may determine such parameters as the time, rate, and duration of inflation. These parameters may be appropriately selected based on occupant conditions such as size of the occupant and the relative distance between the occupant and the airbag.

### Brief Description of the Drawings

FIG. 1 shows a cross-sectional view of a passenger compartment of a motor vehicle.

FIG. 2 shows a simplified block diagram of an inflatable restraint system constructed in accordance with the present invention.

### Detailed Description

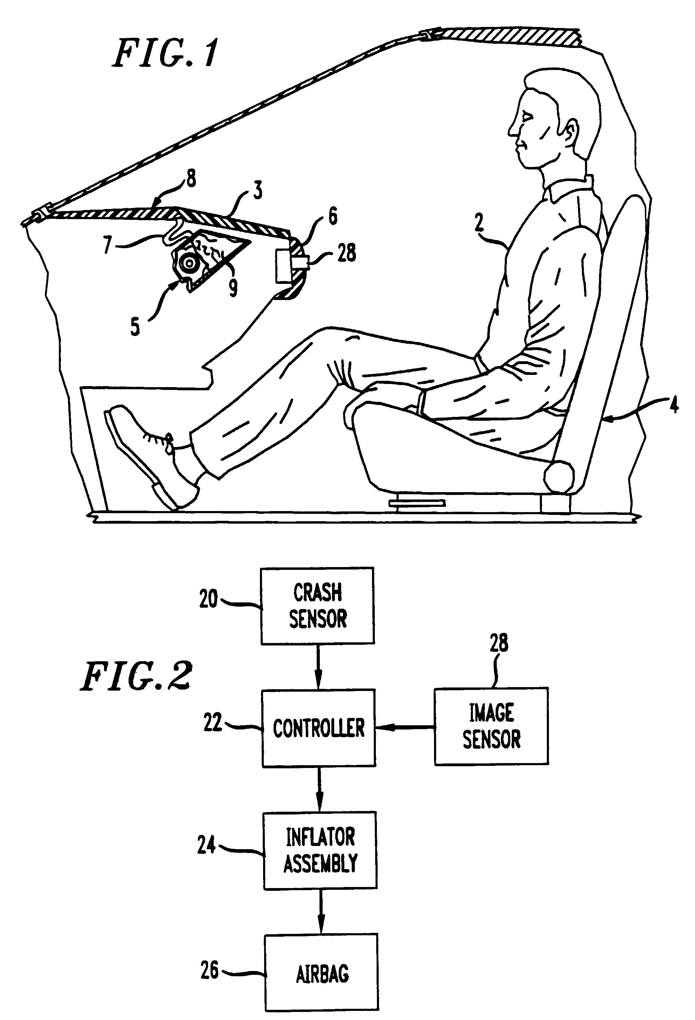

FIG. 1 shows a cross-sectional view of a passenger compartment of a motor vehicle. An occupant 2 is shown seated on a vehicle seat 4. The occupant sits adjacent to and facing a dashboard 6 and a panel 8 having an opening 3 spaced directly above an airbag and inflator assembly 5. The assembly 5 includes a housing 7 mounted beneath the panel 8 and the opening 3. An airbag 9 is stored within the housing 7 in a deflated condition until it is deployed to protect the occupant 2 from injury in an accident. When the airbag is inflated, the panel 8 is rapidly moved away by the expanding airbag.

In operation, the airbag 9 is inflated by a gas generator assembly (not shown). The gas generator assembly typically includes propellant that is ignited to generate gas which fills the airbag. The details of the gas generator assembly are well known and hence will not be discussed further. The gas generator assembly is connected to a controller which senses the impact and controls the inflation and subsequent deflation of the airbag. Expanding gas is directed to the airbag via one or more gas discharge ports. The fill rate of the airbag can be varied by altering the size of the gas discharge ports.

FIG. 2 shows a simplified block diagram of an inflatable restraint system in accordance with the present invention. A crash sensor 20 detects impacts of the vehicle and provides a signal that initiates inflation of the airbag under predetermined conditions that typically include a minimum speed and acceleration. The crash sensor 20 typically includes one or more accelerometers for measuring the acceleration of the vehicle. A controller 22 is responsive to signals from the crash sensor 20 and directs an actuator 24, which includes the previously mentioned gas generator assembly, to inflate or deflate the airbag 26 in accordance with the signals received by the actuator 24. The controller 22 also functions to delay inflation, retard or increase the rate of inflation. One of ordinary skill in the art will recognize that the time of deployment and the rate and duration of inflation may be variable and is a function of the force of the impact, the speed of the vehicle, the size and weight of the occupant, and the location of the occupant relative to the airbag.

In accordance with the present invention, an optical imaging sensor 28 is provided to selectively adjust deployment of the airbag. The imaging sensor 28 determines one or more of the parameters on which the time, rate and duration of inflation depend and provides an appropriate signal to the controller 22. As indicated in FIG. 2, the controller 22 in turn directs the actuator to inflate or deflate the airbag in accordance with the signals received from both the crash sensor 20 and the imaging sensor 228.

Referring again to FIG. 1 the imaging sensor 28 is positioned on the dashboard so that it can monitor occupant parameters such as the precise location and size of the occupant. In some circumstances the imaging sensor may prevent the airbag from inflating. For example, if the imaging sensor detects the presence of an infant seat or the absence of any occupant whatsoever, a signal may be transmitted from the imaging sensor to the controller 22 directing the controller 22 to prevent the airbag from inflating. The imaging sensor may employ known pattern recognition techniques to facilitate the accurate detection and identification of the occupant. The imaging sensor can also determine the relative distance between a portion of the occupant and the airbag and transmit a signal to the controller 22 directing the controller to adjust the rate, delay and duration of inflation in accordance with this information. For example, if the image sensor determines that the occupant is sitting at a relatively far distance from the airbag, the controller can be directed to quickly initiate inflation and increase the inflation rate.

While in the embodiment of the invention shown in FIG. 1 the image sensor 28 is located in the dashboard 6, one of ordinary skill in the art will recognize that the sensor may be alternatively located at any position from which any of the pertinent occupant conditions (e.g., size, position) can be detected. For example, it may be advantageous to place the image sensor directly in the airbag housing. Alternatively, it may be advantageous to locate the image sensor in the footwell 12 of the passenger compartment. In this case the sensor may simply detect the presence or absence of the occupant's legs without the need for complex pattern recognition. If the image sensor does not detect a pair of legs, then there either is no occupant or the occupant is an infant. In either case, the image sensor will direct the controller 22 to inhibit inflation of the airbag. The image sensor also may be located on the ceiling of the passenger compartment. In an alternative embodiment of the invention, a plurality of image sensors are employed. This feature provides a number of advantages, including redundancy to increase reliability and a potential reduction in the need for pattern recognition techniques. For example, image sensors located both in the dashboard and the ceiling of the passenger compartment may be able to detect the presence of an infant more readily than either image sensor by itself.,

While the present invention may employ any type of image sensor, it is desirable to select an image sensor that is compact, inexpensive, reliable and resistant to impacts. Accordingly, it may be advantageous to employ solid-state image sensors such as charge-coupled devices (CCDs) and CMOS imagers. CMOS imagers may be particularly suitable because the associated processing electronics may be integrated on the same chip as the sensor. Examples of such solid state detectors are disclosed in Fossum, E.R. "Active Pixel Sensors: Are CCD's Dinosaurs?" Proceedings of SPIE: Charge-Coupled Devices and Solid State Optical Sensors III, Vol. 1900, pp. 2-14 (1993), for example.

Depending on the particular image sensor that is chosen, it may be necessary to provide a source of illumination sufficient to illuminate the occupant. While the illumination source may provide visible light, it may instead be desirable to use an infrared radiation source since infrared radiation will not interfere with the occupant's vision and since the sensitivity of solid state sensors is easily tailored to infrared wavelengths. The illumination source may be coupled to the crash sensor 20 so that illumination is only provided immediately prior to deployment of the airbag.

## Claims

1. An inflatable restraint system for a vehicle, comprising:
an airbag housing;
an airbag located in said airbag housing;
an inflator assembly for inflating said airbag;
a crash sensor for providing a first signal upon detection of at least one predetermined condition indicative of a crash;
at least one optical image sensor for detecting at least one occupant condition and, in response thereto, providing a second signal, said second signal determining at least one parameter concerning inflation of said airbag;
a controller responsive to said first and second signals, said controller providing a third signal to said inflator assembly such that said inflator assembly inflates said airbag in accordance with said first and second signals.

2. The system of claim 1 wherein said at least one parameter is selected from the time, rate and duration of inflation.

3. The system of claim 1 wherein said at least one occupant condition is whether an occupant is present, or whether an infant is present, or depends on occupant position relative to said airbag.

4. The system of claim 3, wherein said second signal prevents airbag inflation if no occupant is present, or if an infant is present.

5. The system of claim 1 wherein said optical image sensor is located in either a dashboard of the vehicle, or in a footwell of the vehicle, or in said airbag.

6. The system of claim 1 wherein said optical image sensor is a charge-coupled device, or a CMOS imager.

7. The system of claim 1, wherein said optical image sensor is located in a ceiling of the vehicle.

8. The system of claim 1 further comprising a plurality of image sensors.

9. The system of claim 8, wherein said image sensors are located in a dashboard and ceiling of the vehicle, respectively.

10. The system of claim 8, wherein said image sensors are located in a footwell and ceiling of the vehicle, respectively.
